# FASCICULE DE BREVET EUROPEEN

(11) **EP 4 111 714 B1**
(45) Date de publication et mention de la délivrance du brevet: **18.02.2026**
(21) Numéro de dépôt: 21706584.6
(22) Date de dépôt: 23.02.2021
(51) Int. Cl.: H04W 4/06, H04W 8/00

(54) **PROCÉDÉ POUR LA CONFIGURATION AUTOMATIQUE D'UN RÉSEAU DE DIFFUSION ET LA FÉDÉRATION DE PLUSIEURS RÉSEAUX DE DIFFUSION ET SYSTÈME CORRESPONDANT**
VERFAHREN ZUR AUTOMATISCHEN KONFIGURATION EINES RUNDFUNKNETZES UND ZUSAMMENSCHLUSS MEHRERER ENTSPRECHENDER RUNDFUNKNETZWERKE UND SYSTEM
METHOD FOR AUTOMATICALLY CONFIGURING A BROADCAST NETWORK AND FEDERATING A PLURALITY OF CORRESPONDING BROADCAST NETWORKS AND SYSTEM

(30) Priorité: 27.02.2020 FR 2001976
(43) Date de publication de la demande: 04.01.2023
(73) Titulaire: Enensys Technologies, 35510 Cesson-Sévigné (FR)
(72) Inventeur: BURDINAT, Christophe, 69003 Lyon (FR); SCANAVINO, Bartolo, 06500 Menton (FR); THIENOT, Cédric, 75010 Paris (FR)
(74) Mandataire: Vidon Brevets & Stratégie
(86) Numéro de dépôt international: PCT/EP2021/054367
(87) Numéro de publication internationale: WO 2021/170546

(56) Documents cités:
- WO-A1-2015/049432
- ALCATEL-LUCENT: "eMBMS Architecture: Alternatives for Allocation of MCE Function and Requirements on O&M", 3GPP DRAFT; R3-071451 ALLOCATION OF MCE AND REQUIREMENTS ON O&M, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Athens, Greece; 20070815, 15 August 2007 (2007-08-15), XP050162276
- "3rd Generation Partnership Project; Technical Specification Group Radio Access Network; Evolved Universal Terrestrial Radio Access Network (E-UTRAN); M3 Application Protocol (M3AP) (Release 15)", 3GPP STANDARD; TECHNICAL SPECIFICATION; 3GPP TS 36.444, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. V15.0.0, 25 September 2018 (2018-09-25), pages 1 - 66, XP051487365

## Description

### 1. Domaine de l'invention

Le domaine de l'invention est celui des réseaux de communication, notamment des réseaux cellulaires.

Plus précisément, l'invention concerne la gestion de réseaux dits de « diffusion », en anglais « broadcast », permettant de distribuer un même contenu à une pluralité d'utilisateurs.

En particulier, l'invention propose une solution pour la découverte automatique de tels réseaux de diffusion, permettant notamment d'interconnecter plusieurs réseaux entre eux.

L'invention trouve notamment, mais non exclusivement, des applications pour la gestion de réseaux de communication de type LTE (en anglais « Long-Term Evolution», en français « évolution à long terme») supportant la diffusion via MBMS (en anglais « Multimedia Broadcast Multicast Service »), communément appelé « LTE Broadcast », ou de type 5G, supportant la diffusion point à multipoints.

### 2. Art antérieur

Le document WO 2015/049432 A1 (ORANGE [FR]) 9 avril 2015 traite de la diffusion d'identificateurs de source dans des groupes de multidiffusion bidirectionnels.

On rappelle ci-après le fonctionnement d'un réseau LTE pour les communications point à point et pour les communications en diffusion.

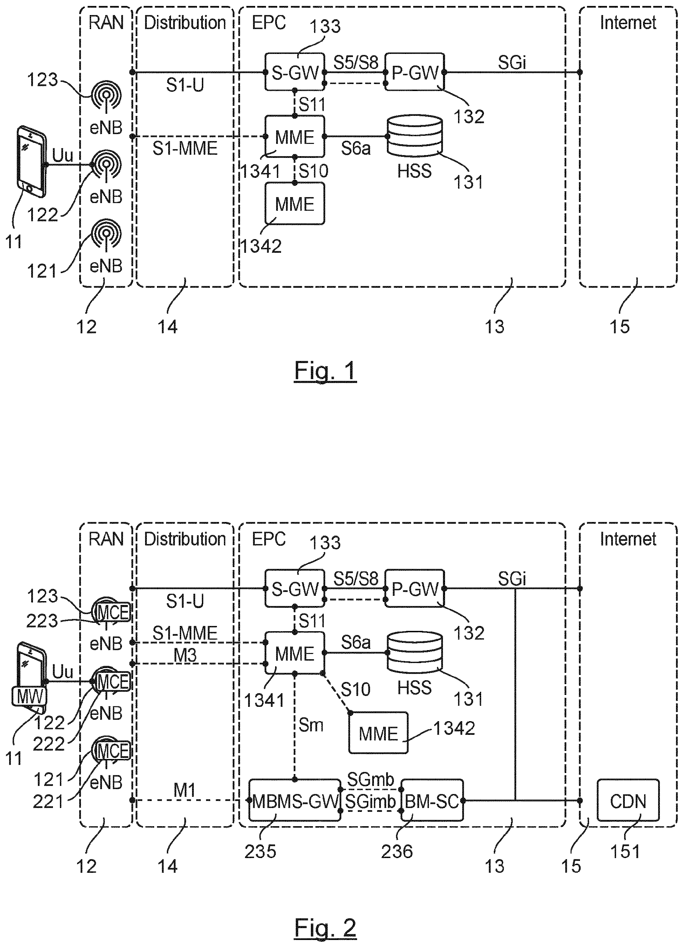

La figure 1 illustre un exemple d'architecture d'un réseau LTE pour les communications point à point. Selon la figure 1, un terminal 11 communique avec au moins une station de base 121, 122, 123, notée eNB ou eNodeB. La ou les stations de base 121-123 appartiennent à la partie radio RAN 12 du réseau LTE (en anglais « Radio Access Network », en français « réseau d'accès radio »). Par exemple, un tel réseau RAN est de type E-UTRAN (en anglais « Evolved Universal Terrestrial Radio Access Network », en français « réseau universel évolué d'accès radio terrestre »).

La ou les stations de base 121-123 communiquent avec différentes entités du cœur de réseau EPC 13 du réseau LTE (en anglais « Evolved Packet Core », en français « cœur de paquet évolué ») par l'intermédiaire d'un réseau de distribution 14.

Classiquement, le cœur de réseau EPC 13 comprend :
- un serveur 131, par exemple de type HSS (en anglais « Home Subscriber Server », en français « serveur d'abonnés résidentiels »), stockant des informations relatives aux abonnés au réseau ;
- une première passerelle 132, par exemple de type P-GW (en anglais « Packet Data Network - Gateway », en français « passerelle de réseau de données par paquets »), communiquant avec un réseau externe 15, par exemple le réseau Internet ;
- une deuxième passerelle 133, par exemple de type S-GW (en anglais « Serving Gateway », en français « passerelle de service », ou routeur, transmettant à la première passerelle 132 les données en provenance de la ou des stations de base 121-123 ;
- au moins une entité de gestion de la mobilité 1341, 1342, par exemple de type MME (en anglais « Mobility Management Entity »), contrôlant le terminal 11 par l'envoi de messages de signalisation tenant compte d'informations issues du serveur 131.

On rappelle que les messages échangés entre les différentes entités formant un réseau LTE comprennent d'une part des messages sur le plan de contrôle (« control plane »), comprenant les fonctions d'allocation des ressources et de la signalisation pour les terminaux utilisateurs, et d'autre part des messages sur le plan utilisateur (« user plane »), comprenant le transport de données.

Au niveau du plan de contrôle, les différentes entités de gestion de la mobilité 1341, 1342 communiquent entre elles par l'intermédiaire d'une interface S1 (par exemple S10). Au moins une entité de gestion de la mobilité 1341, 1342 communique avec la deuxième passerelle 133 par l'intermédiaire d'une interface S1 (par exemple S11) et avec au moins une des stations de base 121-123 par l'intermédiaire d'une interface S1 (par exemple S1-MME). La deuxième passerelle 133 communique avec la première passerelle 132 par l'intermédiaire d'une interface S5 ou S8.

Au niveau du plan utilisateur, le serveur 131 communique avec au moins une entité de gestion de la mobilité 1341, 1342 par l'intermédiaire d'une interface S6a. La deuxième passerelle 133 communique d'une part avec au moins une des stations de base 121-123 par l'intermédiaire d'une interface S1 (par exemple S1-U) et d'autre part avec la première passerelle 132 par l'intermédiaire d'une interface S5 ou S8. La première passerelle 132 communique avec le réseau externe par l'intermédiaire d'une interface SGi.

Ainsi, selon cette architecture, si un utilisateur souhaite recevoir sur son terminal 11 un contenu diffusé par un serveur vidéo connecté au réseau internet 15, une connexion « unicast » (point à point) est créée entre le serveur vidéo et le terminal.

Si plusieurs utilisateurs souhaitent accéder au même contenu au même moment, par exemple lors de la retransmission d'un événement particulier, comme un concert ou un match de football, un support (en anglais « bearer ») est créé entre au moins une des stations de base 121-123 et chaque terminal 11 souhaitant recevoir ce contenu. Il y a donc autant de supports « unicast » que d'utilisateurs souhaitant recevoir simultanément ce contenu, ce qui peut provoquer une surcharge au niveau de la bande passante des stations de base 121-123.

Afin notamment d'économiser de la bande passante au niveau des stations de base, le réseau LTE peut diffuser ce contenu avec MBMS.

La figure 2 illustre un exemple d'architecture LTE pour la diffusion via MBMS.

Selon cet exemple, de nouvelles entités sont prévues dans le cœur de réseau EPC 13 :
- une passerelle multicast 235, par exemple de type MBMS-GW (en anglais « Multimedia Broadcast Multicast Service - Gateway », en français « service multicast de diffusion multimédia - passerelle » ) ;
- une entité de gestion de la diffusion, par exemple un centre de service multicast de diffusion 236 BM-SC (en anglais « Broadcast Multicast Service Center »).

De telles entités permettent notamment d'allouer les ressources radio et de générer les flux de données à diffuser. En particulier, l'entité de gestion de la diffusion 236 peut communiquer avec un serveur de contenu 151, par exemple de type CDN (en anglais « Content Delivery Network ») appartenant par exemple au réseau Internet 15, ou tout autre serveur d'application AS (en anglais « Application Server »).

Par ailleurs, de nouvelles entités sont prévues dans le réseau d'accès radio 12. De telles entités de coordination de la diffusion 221, 222, 223, par exemple de type MCE (en anglais « Multi-Cell/Multicast Coordination Entity ») assurent le contrôle de l'accès et l'allocation des ressources radio à la station de base à laquelle elles sont associées. Par exemple, chaque entité de coordination de la diffusion 221-223 est associée à une station de base 121-123.

De nouvelles interfaces sont également définies pour les échanges de messages.

Ainsi, au niveau du plan de contrôle, le centre de service multicast de diffusion 236 communique avec la passerelle multicast 235 par l'intermédiaire d'une interface SGmb, la passerelle multicast 235 communique avec au moins une entité de gestion de la mobilité 1341, 1342 par l'intermédiaire d'une interface Sm, et ladite au moins une entité de gestion de la mobilité 1341, 1342 communique avec au moins une entité de coordination de la diffusion 221-223 par l'intermédiaire d'une interface M3.

Au niveau du plan utilisateur, le centre de service multicast de diffusion 236 communique avec la passerelle multicast 235 par l'intermédiaire d'une interface SGimb, la passerelle multicast 235 communique avec au moins une station de base 121-123 par l'intermédiaire d'une interface M1. Selon l'architecture d'un réseau LTE pour la diffusion via MBMS, on note que les flux de contenu descendants sur le plan utilisateur (i.e. transitant par l'interface SGimb et l'interface M1, illustrés en pointillés sur la figure 2) sont des flux de type « multicast », i.e. point-à-multipoints.

Si plusieurs utilisateurs souhaitent accéder au même contenu au même moment, un support MBMS peut être créé entre au moins une des stations de base 221-223 et l'ensemble des terminaux souhaitant recevoir ce contenu. Il y a donc un unique support MBMS permettant à l'ensemble des utilisateurs de recevoir simultanément le même contenu.

Ce mode de diffusion présente donc un intérêt notamment lorsque de nombreux utilisateurs souhaitent recevoir le même contenu simultanément, par exemple pour suivre un évènement en temps réel.

Un inconvénient d'une telle architecture pour la diffusion via MBMS est que la configuration des différentes entités est fastidieuse.

Il existe donc un besoin pour simplifier la configuration d'un réseau LTE supportant la diffusion MBMS, ou plus généralement d'un réseau de communication supportant la diffusion.

### 3. Exposé de l'invention

L'invention est définie par les revendications indépendantes 1 et 12.

L'invention propose une solution qui ne présente pas l'ensemble des inconvénients de l'art antérieur sous la forme d'un procédé de gestion d'au moins un réseau de communication, dont un premier réseau de communication comprenant une entité de gestion de la mobilité mettant en œuvre :
- la diffusion, sur une adresse IP multicast, d'un message d'annonce portant un identifiant de ladite entité de gestion de la mobilité ;
- la réception d'au moins un message d'attachement, en provenance d'au moins une entité de coordination de la diffusion dudit premier réseau ou d'au moins un deuxième réseau, portant un identifiant de ladite entité de coordination de la diffusion émettrice du message d'attachement.

On note que selon l'invention, de tels messages d'annonce et d'attachement sont échangés sur le plan de contrôle.

Selon l'invention, on propose ainsi d'utiliser une entité de gestion de la mobilité d'un premier réseau, par exemple de type MME si l'on se place dans le contexte d'un réseau de type LTE pour la diffusion via MBMS, pour diffuser sur une adresse IP multicast un message d'annonce, permettant à au moins une entité de coordination de la diffusion de la diffusion du premier réseau ou d'un autre réseau, par exemple de type MCE si l'on se place dans le contexte d'un réseau de type LTE pour la diffusion via MBMS, de s'attacher à l'entité de gestion de la mobilité du premier réseau.

De cette façon, il est possible de configurer automatiquement l'entité de gestion de la mobilité du premier réseau, avec les informations en provenance des entités de coordination de la diffusion qui répondent au message d'annonce, notamment leurs identifiants, et/ou de configurer automatiquement la ou les entités de coordination qui répondent au message d'annonce.

En particulier, l'entité de gestion de la mobilité du premier réseau peut recevoir des messages d'attachement en provenance d'entité de coordination de la diffusion du premier réseau, ou d'un autre réseau de communication.

La solution proposée peut ainsi être utilisée pour interconnecter, ou fédérer, plusieurs réseaux de communication.

On note que, selon mode de réalisation, le message d'annonce peut être diffusé périodiquement et/ou suite à une modification (par exemple une mise à jour) du message d'annonce.

Par ailleurs, selon un mode de réalisation, le message d'attachement peut être transmis périodiquement et/ou suite à une modification (par exemple une mise à jour) du message d'attachement. Selon un autre mode de réalisation, le message d'attachement n'est transmis qu'une seule fois d'une même entité de coordination de la diffusion vers une même entité de gestion de la mobilité.

L'invention concerne également une entité de gestion de la mobilité correspondante, comprenant :
- des moyens de diffusion, sur une adresse IP multicast, d'un message d'annonce portant un identifiant de l'entité de gestion de la mobilité ;
- des moyens de réception d'au moins un message d'attachement, en provenance d'au moins une entité de coordination de la diffusion du premier réseau ou d'au moins un deuxième réseau, portant un identifiant de l'entité de coordination de la diffusion émettrice dudit message d'attachement.

Une telle entité de gestion de la mobilité, par exemple de type MME si l'on se place dans le contexte d'un réseau de type LTE pour la diffusion via MBMS, est notamment adaptée à mettre en œuvre au moins une partie du procédé de gestion décrit ci-dessus. Elle pourra bien sûr comporter les différentes caractéristiques relatives au procédé de gestion selon l'invention, qui peuvent être combinées ou prises isolément.

L'invention concerne par ailleurs un procédé de gestion d'au moins un réseau de communication, dont un premier réseau comprenant une entité de coordination de la diffusion mettant en œuvre :
- la réception d'un message d'annonce diffusé, sur une adresse IP multicast, par exemple de type IP, par une entité de gestion de la mobilité dudit premier réseau ou d'au moins un deuxième réseau, ledit message d'annonce portant un identifiant de ladite entité de gestion de la mobilité ;
- la transmission à ladite entité de gestion de la mobilité d'au moins un message d'attachement, portant un identifiant de ladite entité de coordination de la diffusion.

Une telle entité de coordination de la diffusion peut notamment recevoir des messages d'annonce diffusés par différentes entités de gestion de la mobilité.

En d'autres termes, une entité de coordination de la diffusion peut s'attacher à une entité de gestion de la mobilité appartenant au même réseau que l'entité de coordination de la diffusion et/ou s'attacher à une entité de gestion de la mobilité appartenant à un réseau distinct.

L'invention concerne également une entité de coordination de la diffusion correspondante, comprenant :
- des moyens de réception d'un message d'annonce diffusé, sur une adresse IP multicast, par une entité de gestion de la mobilité dudit premier réseau ou d'au moins un deuxième réseau, ledit message d'annonce portant un identifiant de ladite entité de gestion de la mobilité ;
- des moyens de transmission à ladite entité de gestion de la mobilité d'au moins un message d'attachement, portant un identifiant de ladite entité de coordination de la diffusion.

Une telle entité de coordination de la diffusion, par exemple de type MCE si l'on se place dans le contexte d'un réseau LTE pour la diffusion via MBMS, est notamment adaptée à mettre en œuvre au moins une partie du procédé de gestion décrit ci-dessus. Elle pourra bien sûr comporter les différentes caractéristiques relatives au procédé de gestion selon l'invention, qui peuvent être combinées ou prises isolément.

L'invention concerne par ailleurs un procédé de gestion d'au moins un réseau de communication, dont un premier réseau comprenant une entité de gestion de la diffusion mettant en œuvre la réception d'un message d'annonce diffusé, sur une adresse IP multicast, par une entité de gestion de la mobilité dudit premier réseau ou d'au moins un deuxième réseau, ledit message d'annonce portant un identifiant de ladite entité de gestion de la mobilité.

De cette façon, il est possible de configurer automatiquement l'entité de gestion de la diffusion du premier réseau, avec les informations portées par le message d'annonce en provenance de l'entité de gestion de la mobilité.

L'invention concerne également une entité de gestion de la diffusion correspondante, comprenant des moyens de réception d'un message d'annonce diffusé, sur une adresse IP multicast, par une entité de gestion de la mobilité dudit premier réseau ou d'au moins un deuxième réseau, ledit message d'annonce portant un identifiant de ladite entité de gestion de la mobilité.

Une telle entité de gestion de la diffusion, par exemple de type BM-SC si l'on se place dans le contexte d'un réseau LTE pour la diffusion via MBMS, est notamment adaptée à mettre en œuvre au moins une partie du procédé de gestion décrit ci-dessus. Elle pourra bien sûr comporter les différentes caractéristiques relatives au procédé de gestion selon l'invention, qui peuvent être combinées ou prises isolément.

En particulier, les différentes étapes du procédé de gestion selon au moins un mode de réalisation de l'invention peuvent être mises en œuvre de diverses manières, notamment sous forme matérielle et/ou sous forme logicielle.

Par exemple, au moins une étape du procédé de gestion peut être mise en œuvre :
- sur une machine de calcul reprogrammable (un ordinateur, un processeur par exemple DSP (en anglais « Digital Signal Processor »), un microcontrôleur, etc) exécutant un programme comprenant une séquence d'instructions,
- sur une machine de calcul dédiée (par exemple un ensemble de portes logiques comme un FPGA (en anglais « Field Programmable Gate Array ») ou un ASIC (en anglais « Application-Specific Integrated Circuit »), ou tout autre module matériel).

En conséquence, un mode de réalisation de l'invention vise aussi à protéger un ou plusieurs programmes d'ordinateur comportant des instructions adaptées à la mise en œuvre d'au moins une partie d'un procédé de gestion par une entité de gestion de la mobilité, une entité de coordination de la diffusion, et/ou une entité de gestion de la diffusion, selon au moins un mode de réalisation de l'invention tel que décrit ci-dessus, lorsque ce ou ces programmes sont exécutés par un processeur, ainsi qu'au moins un support d'informations lisible par un ordinateur comportant des instructions d'au moins un programme d'ordinateur tel que mentionné ci-dessus.

### 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
[Fig. 1] la figure 1, présentée en relation avec l'art antérieur, illustre un exemple d'architecture d'un réseau LTE pour les communications unicast (point à point) ;
[Fig. 2] la figure 2, également présentée en relation avec l'art antérieur, illustre un exemple d'architecture d'un réseau LTE pour la diffusion via MBMS ;
[Fig. 3] la figure 3 illustre deux exemples de réseaux de radiocommunication mettant en œuvre le procédé de gestion selon un mode de réalisation de l'invention ;
[Fig. 4] la figure 4 illustre les principales étapes du procédé de gestion ;
[Fig. 5], [Fig. 6], [Fig. 7] les figures 5 à 7 illustrent la structure simplifiée d'une entité de gestion de la mobilité, d'une entité de coordination de la diffusion et d'une entité de gestion de la diffusion selon un mode de réalisation de l'invention.

### 5. Description de modes de réalisation de l'invention

### 5.1 Principe général

L'invention se place dans le contexte d'un réseau de communication mettant en œuvre plusieurs entités pour l'allocation des ressources et de la signalisation sur le plan de contrôle, comprenant notamment une entité de coordination de la diffusion et une entité de gestion de la mobilité.

Le principe général de l'invention repose sur la diffusion, par l'entité de gestion de la mobilité, sur une adresse IP multicast, d'au moins son identifiant. En particulier, une telle adresse IP multicast peut être définie lors de la configuration du réseau. Selon un mode de réalisation particulier, une telle adresse IP peut être paramétrable.

De cette façon, l'entité de gestion de la mobilité peut découvrir différentes entités du réseau de communication considéré ou d'autres réseaux de communication, et la ou les entités de coordination de la diffusion du réseau de communication considéré ou d'autres réseaux de communication peu(ven)t s'attacher à l'entité de gestion de la mobilité du réseau considéré.

En particulier, il est ainsi possible d'interconnecter plusieurs réseaux de communication, pour pouvoir par exemple diffuser simultanément des informations sur une zone de diffusion commune à ces différents réseaux, dite zone de diffusion fédérée.

Une zone de diffusion correspond par exemple à une cellule couverte par une station de base associée à une entité de coordination de la diffusion, dans laquelle du contenu peut être distribué. En particulier, une zone de diffusion peut être identifiée par un identifiant.

Dans un réseau LTE pour la diffusion via MBMS, une zone de diffusion est appelée « MBMS service area » et un identifiant « MBMS SAI » (« MBMS Service Area Identifier »).

Par exemple, de tels réseaux peuvent être des réseaux privés, notamment des réseaux mobiles, déployés par différents prestataires (par exemple forces de l'ordre, pompiers, etc). Ainsi, chaque réseau de communication peut être associé à une bulle tactique.

### 5.2 Description d'un mode de réalisation

On décrit ci-après un exemple de mise en œuvre de l'invention dans un réseau de communication de type LTE supportant la diffusion en MBMS, tel qu'illustré par exemple en figure 2. Bien entendu, l'invention ne se limite pas à ce type de réseau, et s'applique notamment à des réseaux 5G ou autre, supportant une diffusion point à multipoints. Par exemple, dans le cas d'un réseau 5G, l'entité de coordination de la diffusion peut être de type gNodeB. En d'autres termes, les fonctionnalités de l'entité de coordination de la diffusion peuvent être intégrées à un gNodeB. Selon un mode de réalisation particulier, la solution proposée permet d'interconnecter des réseaux de différents types.

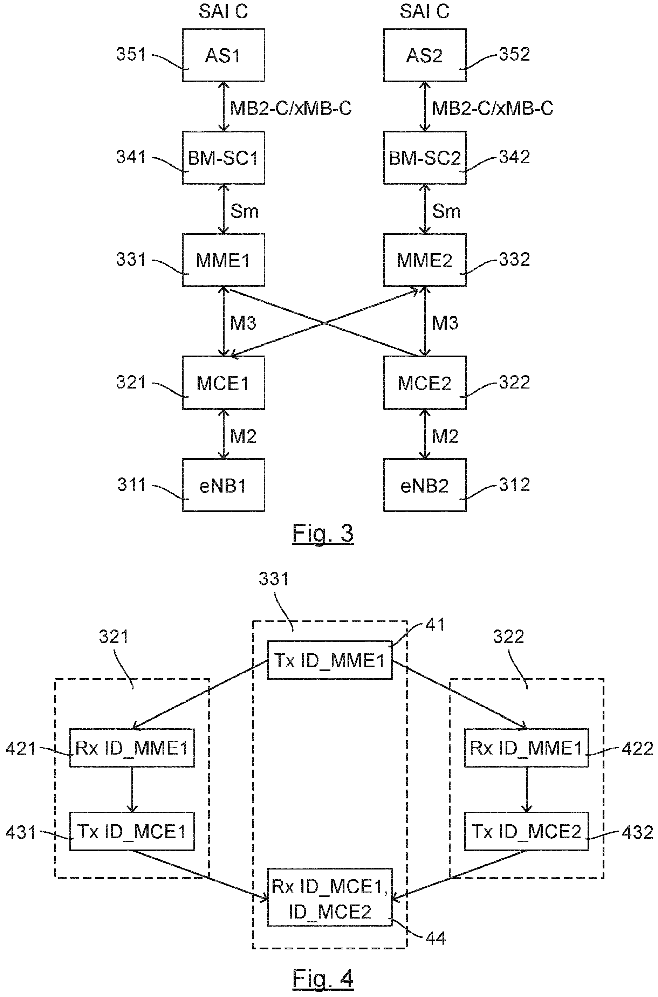

Comme illustré en figure 3, on considère un premier réseau de communication comprenant au moins une station de base eNB1 311, gérée par une entité de coordination de la diffusion MCE1 321. Par exemple, la station de base eNB1 311 peut communiquer avec l'entité MCE1 par l'intermédiaire d'une interface M2. L'entité MCE1 peut communiquer avec une entité de gestion de la mobilité MME1 331 par l'intermédiaire d'une interface M3. L'entité MME1 331 peut communiquer avec une entité de gestion de la diffusion BM-SC1 341 par l'intermédiaire d'une interface Sm. L'entité BM-SC1 341 peut communiquer avec un serveur d'application AS1 351, par l'intermédiaire d'une interface MB2-C et/ou d'une interface xMB-C.

Selon un mode particulier, une entité de type passerelle multicast (par exemple de type MBMS-GW) peut être prévue entre l'entité MME1 331 et l'entité BM-SC1 341, notamment si les fonctionnalités associées à la passerelle multicast ne sont pas mises en œuvre par l'entité BM-SC1 341.

Selon un autre mode de réalisation, certaines fonctionnalités associées à ces différentes entités (notamment MME, MBMS-GW, BM-SC1) peuvent être mises en œuvre par une même entité.

On considère également au moins un deuxième réseau de communication présentant une architecture similaire, avec au moins une station de base eNB2 312, une entité de coordination de la diffusion MCE2 322, une entité de gestion de la mobilité MME2 332, une entité de gestion de la diffusion BM-SC2 342, un serveur d'application AS2 352.

### A) Configuration des entités de coordination de la diffusion (MCE)

La figure 4 illustre les principales étapes mises en œuvre par différentes entités du premier réseau de communication, et éventuellement d'au moins un deuxième réseau de communication, selon la figure 3.

Afin de découvrir les entités du réseau de communication auquel elle appartient, une entité de gestion de la mobilité, par exemple l'entité MME1 331, diffuse 41 sur une adresse multicast prédéfinie un message d'annonce portant son identifiant. Par exemple, un tel message d'annonce est envoyé à une adresse IP et un port prédéfinis (par exemple à l'adresse 239.1.1.1 et sur le port 364444), et porte un identifiant unique de l'entité MME1 331 (ID_MME1), ainsi que son adresse IP et les ports disponibles pour l'interface M3.

Selon un mode de réalisation particulier, le message d'annonce peut être sécurisé avant diffusion, par exemple crypté et/ou signé.

Les différentes entités des réseaux de communication, et notamment les entités MCE1 321 et MCE2 322 peuvent recevoir le message d'annonce en écoutant cette adresse multicast prédéfinie, et obtenir l'identifiant de l'entité MME1 331.

Si une entité souhaite s'attacher à l'entité de gestion de la mobilité émettrice du message d'annonce, elle peut transmettre un message d'attachement portant son identifiant.

La procédure classique d'attachement d'une entité MCE à une entité MME, également appelée procédure de configuration de l'interface M3, ou « M3 set up procedure » en anglais, est notamment décrite dans la spécification technique 3GPP TS 36.444 V15.0.0 (2018-09), paragraphe 8.7.

Par exemple, l'entité MCE1 321 transmet 432 à l'entité MME1 au moins un message d'attachement portant son identifiant ID_MCE1. De la même façon, l'entité MCE2 322 transmet 432 peut transmettre à l'entité MME1 331 au moins un message d'attachement portant son identifiant ID_MCE2. L'entité MCE2 322 peut également s'attacher à l'entité MME2 332, de façon classique ou suite à la réception d'un message d'annonce en provenance de l'entité MME2 332.

D'une façon plus générale, une entité de coordination de la diffusion peut s'attacher à plusieurs entités de gestion de la mobilité, pouvant appartenir à des réseaux distincts.

Ainsi, l'entité de gestion de la mobilité émettrice du message d'annonce met en œuvre la réception 44 d'au moins un message d'attachement, en provenance d'au moins une entité de coordination de la diffusion du premier réseau et/ou d'au moins un deuxième réseau, portant un identifiant de l'entité de coordination de la diffusion émettrice du message d'attachement.

Les entités MCE1 321 et MCE2 322 découvrent ainsi les entités MME ayant émis un message d'annonce, notamment l'entité MME1 331, et peuvent les ajouter dans leur liste des entités MME avec lesquelles elles sont autorisées à communiquer. La procédure de configuration de l'interface M3 peut alors se dérouler.

On note que selon un mode de réalisation particulier, l'identifiant de l'entité de gestion de la mobilité émettrice du message d'annonce peut être stocké dans une table gérée par l'entité de coordination de la diffusion émettrice du message d'attachement.

De la même façon, l'identifiant de la ou des entités de coordination de la diffusion émettrices d'un message d'attachement peut être stocké dans une table gérée par l'entité de gestion de la mobilité émettrice du message d'annonce.

Selon un mode de réalisation particulier, l'entité de coordination de la diffusion transmet également à ladite entité de gestion de la mobilité :
- au moins une information représentative d'au moins une zone de diffusion associée à cette entité de coordination de la diffusion et/ou
- au moins une liste d'au moins un support multicast activé dans au moins une zone de diffusion associée à cette entité de coordination de la diffusion.

Dans un réseau LTE pour la diffusion via MBMS, un tel support multicast est également appelé support MBMS, ou « MBMS bearer ». Par exemple, un tel support multicast est un support « logique ».

On note que l'« activation » d'un support multicast dans au moins une zone de diffusion correspond à l'allocation des ressources radio sur cette zone de diffusion et la configuration des stations de base /eNodeB associé(e)s à cette zone de diffusion, pour assurer l'envoi de flux multicast sur ces ressources radio.

Une entité de coordination de la diffusion (par exemple l'entités MCE1321 et/ou l'entité MCE2 322) peut ainsi remonter certaines informations à (ou aux) entité(s) de gestion de la mobilité (par exemple l'entité MME1) à laquelle (ou auxquelles) elle est attachée ou souhaite s'attacher, de façon à optimiser la diffusion d'informations.

Selon un mode de réalisation particulier, l'entité de coordination de la diffusion met à jour le message d'attachement en y ajoutant :
- la ou les informations représentatives d'au moins une zone de diffusion qui lui est associée, et/ou
- la ou les listes d'au moins un support multicast activé dans au moins une zone de diffusion qui lui est associée.

En d'autres termes, ces informations et/ou listes peuvent être transmises dans le message d'attachement. On considère alors que le message d'attachement est « étendu ».

Dans un autre mode de réalisation, ces informations et/ou listes peuvent être transmises dans un autre message, distinct du message d'attachement.

Lorsqu'une nouvelle entité de coordination de la diffusion s'attache à une entité de gestion de la mobilité, la ou les zone(s) de diffusion associée(s) à cette nouvelle entité de coordination de la diffusion et/ou le ou les supports multicast activé(s) dans la ou les zone(s) de diffusion associée(s) à cette nouvelle entité de coordination de la diffusion peuvent être notifiées à l'entité de gestion de la mobilité, et éventuellement enregistrées dans une table.

Comme indiqué ci-dessus, selon ce mode de réalisation particulier, l'entité de gestion de la mobilité (par exemple l'entité MME1) peut donc recevoir, en provenance d'au moins une entité de coordination de la diffusion :
- au moins une information représentative d'au moins une zone de diffusion associée à ladite ou auxdites entités de coordination de la diffusion et/ou
- au moins une liste d'au moins un support multicast activé dans au moins une zone de diffusion associée à ladite ou auxdites entités de coordination de la diffusion.

De telles informations peuvent être stockées dans une table gérée par l'entité de gestion de la mobilité, préférentiellement en relation avec l'identifiant de la ou des entités de coordination de la diffusion.

Selon un mode de réalisation particulier, l'entité de gestion de la mobilité met à jour le message d'annonce en y ajoutant :
- la ou les informations représentatives d'au moins une zone de diffusion associée à la ou aux entités de coordination de la diffusion et/ou
- la ou les listes d'au moins un support multicast activé dans au moins une zone de diffusion associée à la ou aux entités de coordination de la diffusion.

Ces informations et/ou listes peuvent ainsi être transmises dans le message d'annonce, qui peut notamment être reçu par d'autres entités du réseau, comme l'entité de gestion de la diffusion BM-SC1 341, ou une passerelle multicast. On considère alors que le message d'annonce est « étendu ».

Selon un autre mode de réalisation, ces informations et/ou listes peuvent être transmises dans un message distinct du message d'annonce.

De cette façon, l'entité de gestion de la mobilité peut disposer d'informations sur la ou les zones de diffusion associées à une entité de coordination de la diffusion émettrice d'un message d'attachement, i.e. la ou les zones de diffusion d'une station de base associée à une telle entité de coordination de la diffusion.

De même, l'entité de gestion de la mobilité peut disposer d'informations sur le ou les supports multicast d'ores et déjà activés sur la ou les zones de diffusion associées à une entité de coordination de la diffusion.

### B) Configuration des entités de gestion de la diffusion (BM-SC) et de la passerelle multicast (MBMS-GW)

Une entité de gestion de la diffusion, ou d'autres entités du même réseau que celui auquel appartient l'entité de gestion de la mobilité émettrice du message ou d'un autre réseau, peuvent également « écouter » l'adresse multicast prédéfinie sur laquelle est diffusé le message d'annonce.

Ainsi, une entité de gestion de la diffusion (par exemple l'entité BM-SC1 341 et/ou l'entité BM-SC2 342) peut recevoir le message d'annonce diffusé par une entité de gestion de la mobilité du premier réseau ou d'au moins un deuxième réseau, et obtenir l'identifiant de l'entité de gestion de la mobilité émettrice du message d'annonce.

De cette façon, il est possible de configurer automatiquement l'entité de gestion de la diffusion, avec les informations portées par le message d'annonce en provenance de l'entité de gestion de la mobilité.

En particulier, selon un mode de réalisation décrit ci-dessus, le message d'annonce porte également :
- au moins une information représentative d'au moins une zone de diffusion associée à au moins une entité de coordination de la diffusion attachée à ladite entité de gestion de la mobilité ; et/ou
- au moins une liste d'au moins un support multicast activé dans au moins une zone de diffusion associée à au moins une entité de coordination de la diffusion attachée à ladite entité de gestion de la mobilité.

Ainsi, l'entité de gestion de la diffusion peut identifier des zones de diffusion propres à certaines entités de coordination de la diffusion, et des zones de diffusion communes à plusieurs entités de coordination de la diffusion.

Cette configuration, ou connaissance des zones de diffusion au niveau de l'entité de gestion de la diffusion peut donc être mise à jour au fur et à mesure de l'attachement ou de la libération de nouvelles entités de coordination de la diffusion.

En particulier, la ou les zones de diffusion peuvent être configurées dans l'entité de gestion de la mobilité ou dans toute autre entité en amont du réseau (entité de gestion de la diffusion, passerelle multicast, serveur d'application par exemple) à l'installation. La configuration de l'entité de gestion de la mobilité peut être mise à jour à réception du message d'attachement en provenance d'une entité de coordination de la diffusion, et la configuration des autres entités en amont du réseau peut être mise à jour à réception du message d'annonce en provenance de l'entité de gestion de la mobilité, après mise à jour.

Une entité de gestion de la diffusion peut également connaitre la charge des entités de coordination de la diffusion attachées à l'entité de gestion de la mobilité elle-même attachée à l'entité de gestion de la diffusion. Plus précisément, selon un mode de réalisation particulier, l'entité de gestion de la mobilité peut transmettre à l'entité de gestion de la diffusion de son réseau ou d'un autre réseau (ou à d'autres entités du réseau, par exemple la passerelle multicast ou le serveur d'application) la liste des supports multicast activés par zone de diffusion. Par exemple, l'entité de gestion de la diffusion BM-SC1341 peut connaître la charge des entités MCE1 321 et MCE2 322. De même, l'entité de gestion de la diffusion BM-SC2 342 peut connaître la charge des entités MCE1 321 et MCE2 322.

Ces informations peuvent notamment être remontées des entités de coordination de la diffusion MCE1 321 et MCE2 322 vers l'entité de gestion de la mobilité MME1 331, par exemple dans le message d'attachement ou dans un autre message, et de l'entité de gestion de la mobilité MME1 331 vers l'entité de gestion de la diffusion BM-SC1341 (et éventuellement l'entité de gestion de de la diffusion BM-SC2 342), par exemple dans le message d'annonce ou dans un autre message.

En d'autres termes, l'entité de gestion de la diffusion peut, selon un mode de réalisation particulier, connaître la liste des supports multicast activés par zone de diffusion, et les informations liées à ces supports multicast, par exemple :
- identifiant TMGI ( « Temporary Mobile Group Identity »),
- qualité de service QoS : débit garanti GBR (« Guaranteed Bit Rate »), priorité d'attribution et de maintien ARP (« Allocation and Retention Priority »), identifiant de classe de qualité de service QCI (« QoS Class Identifier ») et/ou début du support multicast et durée), etc.

Ces informations peuvent notamment être portées par le message d'annonce diffusé par l'entité de gestion de la mobilité.

### C) Diffusion fédérée

Selon au moins un mode de réalisation de l'invention, la réception d'au moins un message d'attachement en provenance d'au moins une entité de coordination de la diffusion permet à une entité de gestion de la mobilité d'identifier les zones de diffusion propres à chaque entité de coordination de la diffusion, et les zones de diffusion communes à plusieurs entités de coordination de la diffusion, dites zones de diffusion fédérée.

Par exemple, si l'entité MCE1321 est associée à trois zones de diffusion région A, région B et région C, et si l'entité MCE2 322 est associée à deux zones de diffusion région C et région D, alors la région C est commune aux deux entités MCE1 321 et MCE2 322. La zone de diffusion correspondant à la région A pour l'entité MCE1 peut être identifiée par l'identifiant SAI_1_A, la zone de diffusion correspondant à la région B pour l'entité MCE2 peut être identifiée par l'identifiant SAI_1_B, la zone de diffusion correspondant à la région C pour l'entité MCE1 peut être identifiée par l'identifiant SAI_1_C, la zone de diffusion correspondant à la région C pour l'entité MCE2 peut être identifiée par l'identifiant SAI_2_C et la zone de diffusion correspondant à la région D pour l'entité MCE2 peut être identifiée par l'identifiant SAI_2_D. La zone de diffusion commune, appelée zone de diffusion fédérée, peut être identifiée par un nouvel identifiant SAI_C.

En particulier, l'entité de gestion de la mobilité MME1331 peut recevoir une demande d'activation d'au moins un support multicast dans au moins une zone de diffusion fédérée, la région C selon cet exemple. Cette demande provient par exemple d'un serveur d'application et est relayée par une entité de gestion de la diffusion. La demande d'activation peut notamment porter un champ avec l'identifiant SAI_C.

A réception de cette demande d'activation, l'entité de gestion de la mobilité peut identifier la ou les entités de coordination de la diffusion associées à la zone de diffusion fédérée, appartenant au premier réseau et/ou à au moins un deuxième réseau (par exemple les deux entités MCE1 321 et MCE2 322 pour la région C).

L'entité de gestion de la mobilité peut alors transmettre la demande d'activation aux entités de coordination de la diffusion identifiées.

Selon ce mode de réalisation, il est ainsi possible, pour une entité de gestion de la mobilité d'un premier réseau, de transmettre des instructions de diffusion à des entités de coordination de la diffusion appartenant à ce premier réseau et/ou à au moins un autre réseau, et donc de diffuser des informations simultanément dans des réseaux distincts.

Par exemple, lorsqu'un support multicast est activé dans la zone de diffusion fédérée (région C), l'entité de gestion de la mobilité MME1331 peut allouer des ressources multicast à toutes les entités de coordination de la diffusion associées à cette zone de diffusion (par exemple les deux entités MCE1 321 et MCE2 322). Une entité de gestion de la mobilité, ou une entité en amont dans le réseau (par exemple une entité de gestion de la diffusion ou un serveur d'application) peut ainsi activer un support multicast associé à des entités de coordination de la diffusion appartenant à différents réseaux en utilisant une zone de diffusion fédérée.

Si une nouvelle entité de coordination de la diffusion également associée à cette zone de diffusion fédérée (région C) s'attache à l'entité de gestion de la mobilité MME1331, et qu'un support multicast est déjà activé dans la zone de diffusion fédérée, alors l'entité de gestion de la mobilité MME1 331 peut mettre à jour l'allocation des ressources multicast, et demander à la nouvelle entité de coordination de la diffusion d'allouer des ressources pour ce support multicast.

La couverture des supports multicast définis sur une zone de diffusion commune est donc étendue automatiquement lorsqu'une nouvelle entité de coordination de la diffusion s'attache à l'entité de gestion de la mobilité.

En d'autres termes, les supports multicast activés ne sont pas interrompus lors de l'attachement d'une nouvelle entité de coordination de la diffusion, et peuvent être propagés vers la nouvelle entité de coordination de la diffusion.

Selon au moins un mode de réalisation de l'invention, l'entité de gestion de la diffusion peut au préalable mettre en œuvre :
- la réception d'une demande d'activation d'au moins un support multicast dans au moins une zone de diffusion fédérée, en provenance par exemple d'un serveur d'application,
- la vérification de la disponibilité des ressources radio dans ladite au moins une zone de diffusion fédérée, en tenant compte du ou des supports multicast activés dans ladite zone de diffusion fédérée, obtenus à partir de ladite liste,
- en cas de vérification positive, la transmission à ladite entité de gestion de la mobilité de ladite demande d'activation d'au moins un support multicast dans ladite au moins une zone de diffusion fédérée.

En particulier, la connaissance de la charge des entités de coordination de la diffusion permet à l'entité de gestion de la diffusion de mettre en œuvre un contrôle de la capacité du réseau avant d'activer ou mettre à jour un support multicast. Par exemple, au cours de l'étape de vérification de la disponibilité des ressources radio, l'entité de gestion de la diffusion vérifie si le débit du support multicast à activer (nouveau support multicast ou support multicast mis à jour) ne dépasse pas un seuil configuré pour la zone de diffusion considérée, de façon à éviter les problèmes de congestion.

### D) Vérification de la configuration des réseaux de communication

Selon au moins un mode de réalisation, une étape de vérification que la configuration des réseaux permet une interconnexion, encore appelée fédération, est mise en œuvre préalablement à la diffusion dans une zone fédérée.

Ainsi, selon au moins un mode de réalisation, l'entité de gestion de la mobilité (MME1) transmet à ladite au moins une entité de coordination (MCE1 ou MCE2) de la diffusion des paramètres de configuration du réseau auquel appartient l'entité de gestion de la mobilité.

De tels paramètres sont notamment destinés à la synchronisation des stations de base gérées par lesdites entités de coordination de la diffusion. Par exemple, de tels paramètres de configuration comprennent au moins un élément appartenant au groupe comprenant :
- MBSFN Area Id - identifiant de zone MBSFN ;
- PDCCH Length - longuur du canal PDCCH ;
- repetition Period - période de répétition ;
- repetition Period Extended - période de répétition étendue ;
- offset - décalage ;
- modification Period - période de modification ;
- modification Period Extended - période de modification étendue ;
- subframe Allocation Information - information sur l'allocation des sous-trames ;
- Modulation and Coding Scheme - schéma de modulation et codage ;
- cell Information List - liste d'informations sur les cellules ;
- subcarrier Spacing MBMS - espacement entre les sous-porteuses MBMS ;
- etc ;
tels que définis notamment dans le tableau 9.2.1.13 de la spécification technique 3GPP TS 36.443, version V15.0.0.

En particulier, de tels paramètres de configuration peuvent être utilisés pour configurer de façon similaire les différents réseaux de communication, i.e. différentes entités formant un réseau (par exemple l'entité de gestion de la mobilité, l'entité de coordination de la diffusion, et/ou l'entité de gestion de la diffusion).

De leur côté, la ou les entités de coordination de la diffusion attachées à l'entité de gestion de la mobilité met(tent) en œuvre :
- l'obtention de paramètres de configuration du réseau auquel appartient l'entité de gestion de la mobilité,
- la vérification de sa compatibilité avec lesdits paramètres de configuration.

Ces paramètres peuvent être transmis par la (ou les) entité(s) de gestion de la mobilité à laquelle (ou auxquelles) l'entité de coordination de la diffusion est attachée dans le message d'annonce ou bien dans un autre message.

Par exemple, l'entité MCE2 322, appartenant à un deuxième réseau, reçoit des paramètres de configuration en provenance de l'entité MME1331, appartenant au premier réseau, décrivant la configuration du premier réseau.

En particulier, en cas de vérification positive (i.e. si le deuxième réseau peut être configuré avec les mêmes paramètres que le premier réseau), l'entité de coordination de la diffusion du deuxième réseau est configurée à partir desdits paramètres de configuration du premier réseau. Une telle configuration permet par exemple une diffusion multicast synchronisée entre les stations de base, où les signaux des supports multicast de chacune s'ajoutent positivement sans interférences destructives (MBSFN, en anglais « Multicast Broadcast Single Frequency Network ») des stations de base gérées par ladite entité de coordination de la diffusion.

En cas de vérification négative, ladite entité de coordination de la diffusion du deuxième réseau met en œuvre la transmission à ladite entité de gestion de la mobilité du premier réseau d'une information selon laquelle ladite entité de coordination de la diffusion ne peut pas travailler en mode synchronisé.

Ainsi, avant de lancer la procédure de configuration de l'interface M3, une entité de coordination de la diffusion peut vérifier si les configurations des réseaux sont compatibles avec un fonctionnement en fédération.

En particulier, si les différents réseaux de communication sont prévus pour diffuser des données multicast sur une même fréquence (MBSFN), certains paramètres radio doivent être alignés. A titre d'exemple, les identifiants de la zone de diffusion fédérée (« MBMS Service Area Identifier ») doivent pointer sur le même identifiant de zone MBSFN dans les deux réseaux.

Si les identifiants de la zone de diffusion fédérée pointent sur des identifiants de zone MBSFN différents, la diffusion dans les deux réseaux reste possible, mais sans synchronisation entre les deux réseaux.

Selon un mode de réalisation particulier, les paquets fournis par l'entité de gestion de la diffusion portent un entête de synchronisation SYNC (tel que défini par exemple selon les spécifications 3GPP TS 25.346 ou GPP TS 25.446), avec une position et une estampille temporelle, permettant aux stations de base de ré-ordonner les paquets avant de les transmettre simultanément en MBSFN. Les paramètres du protocole de synchronisation SYNC peuvent également être alignés : durée de la période SYNC, durée de la séquence SYNC, origine.

Selon un autre mode de réalisation particulier, l'entité de coordination de la diffusion peut, à réception de ces paramètres de configuration, s'auto-configurer de façon à permettre une diffusion MBSFN sur une zone de diffusion fédérée.

Comme indiqué ci-dessus, ces paramètres de configuration peuvent être ajoutés au message d'annonce diffusé par l'entité de gestion de la mobilité, de façon que les entités de coordination de la diffusion des autres réseaux puissent s'aligner sur les paramètres de configuration du réseau auquel appartient l'entité de gestion de la mobilité.

Dans un autre mode de réalisation, ces paramètres de configuration sont transmis dans un autre message envoyé par l'entité de gestion de la mobilité.

Dans encore un autre mode de réalisation, ces paramètres de configuration sont insérés dans un message utilisé dans la procédure de configuration de l'interface M3.

### E) Variantes

On a décrit ci-dessus la mise en œuvre de l'invention dans au moins un réseau de communication pour la configuration automatique de différentes entités appartenant au réseau, ou d'au moins deux réseaux de communication pour la fédération de réseaux.

Bien entendu, chaque réseau peut être équipé d'une ou plusieurs entités de même type (une ou plusieurs entités de coordination de la diffusion, une ou plusieurs entités de gestion de la mobilité, etc).

De même, la fédération peut être étendue à un plus grand nombre de réseaux.

Selon un mode de réalisation particulier, l'entité de gestion de la diffusion de chaque réseau met en œuvre un contrôle de la capacité du réseau avant d'activer ou mettre à jour un support multicast. En reprenant l'exemple précédent, pour une diffusion dans la région C, l'entité BM-SC1 341 et/ou l'entité BM-SC2 342 peuvent vérifier que le support multicast associé à la région C peut être activé.

En particulier, un réseau de communication (i.e. au moins une entité du réseau de communication) peut ne pas autoriser la fédération de réseaux de communication, ou sortir d'une fédération.

Par exemple, un indicateur est prévu pour indiquer si le mode « fédération » est autorisé ou non.

Par ailleurs, on a décrit la mise en œuvre du procédé de gestion au niveau des entités de gestion de la mobilité, de coordination de la diffusion, et éventuellement de gestion de la diffusion.

Bien entendu, certaines fonctionnalités des différentes entités peuvent être virtualisées ou mises en œuvre en « périphérie de réseau », selon une technique de type « multi-access edge computing ».

### 5.3 Dispositifs

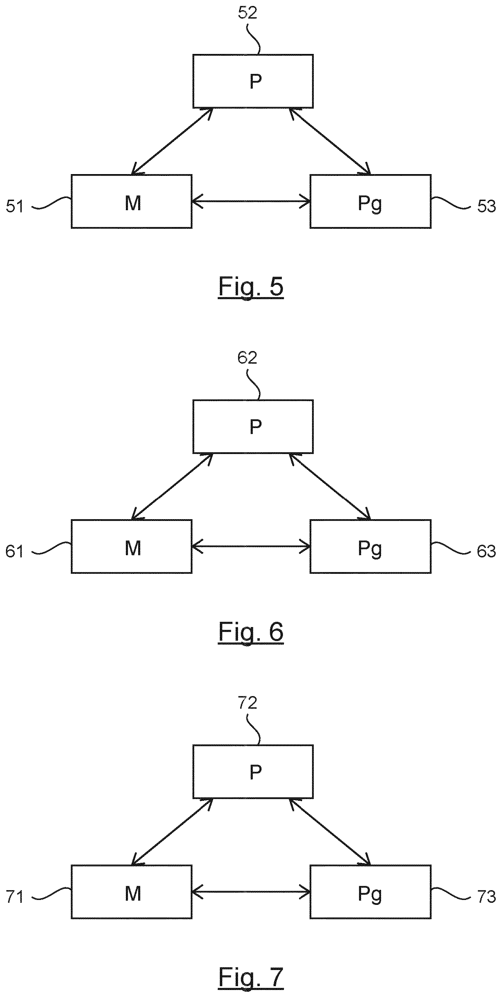

On présente finalement, en relation avec les figures 5 à 7, les structures simplifiées d'une entité de gestion de la mobilité, d'une entité de coordination de la diffusion, et d'une entité de gestion de la diffusion selon au moins un mode de réalisation de l'invention.

Comme illustré en figure 5, une entité de gestion de la mobilité selon un mode de réalisation de l'invention comprend une mémoire 51 (comprenant par exemple une mémoire tampon) et une unité de traitement 52 (équipée par exemple d'au moins un processeur, FPGA, ou DSP), pilotée ou pré-programmée par une application ou un programme d'ordinateur 53 mettant en œuvre au moins une partie du procédé de gestion d'au moins un réseau de communication selon un mode de réalisation de l'invention (mis en œuvre par une entité de gestion de la mobilité).

A l'initialisation, les instructions de code du programme d'ordinateur 53 sont par exemple chargées dans une mémoire RAM avant d'être exécutées par l'unité de traitement 52. L'unité de traitement 52 met en œuvre au moins une partie des étapes du procédé de gestion, selon les instructions du programme d'ordinateur 53.

Pour ce faire, selon un mode de réalisation, l'unité de traitement 52 de l'entité de gestion de la mobilité est configurée pour :
- diffuser, sur une adresse multicast, un message d'annonce portant un identifiant de ladite entité de gestion de la mobilité ;
- recevoir au moins un message d'attachement, en provenance d'au moins une entité de coordination de la diffusion, portant un identifiant de l'entité de coordination de la diffusion émettrice du message d'attachement.

Comme illustré en figure 6, une entité de coordination de la diffusion selon un mode de réalisation de l'invention comprend une mémoire 61 (comprenant par exemple une mémoire tampon) et une unité de traitement 62 (équipée par exemple d'au moins un processeur, FPGA, ou DSP), pilotée ou pré-programmée par une application ou un programme d'ordinateur 63 mettant en œuvre au moins une partie du procédé de gestion d'au moins un réseau de communication selon un mode de réalisation de l'invention (mis en œuvre par une entité de coordination de la diffusion).

A l'initialisation, les instructions de code du programme d'ordinateur 63 sont par exemple chargées dans une mémoire RAM avant d'être exécutées par l'unité de traitement 62. L'unité de traitement 62 met en œuvre au moins une partie des étapes du procédé de gestion, selon les instructions du programme d'ordinateur 63.

Pour ce faire, selon un mode de réalisation, l'unité de traitement 62 de l'entité de coordination de la diffusion est configurée pour :
- recevoir un message d'annonce diffusé, sur une adresse multicast, par une entité de gestion de la mobilité, ledit message d'annonce portant un identifiant de ladite entité de gestion de la mobilité ;
- transmettre à ladite entité de gestion de la mobilité d'au moins un message d'attachement, portant un identifiant de ladite entité de coordination de la diffusion.

Comme illustré en figure 7, une entité de gestion de la diffusion selon un mode de réalisation de l'invention comprend une mémoire 71 (comprenant par exemple une mémoire tampon) et une unité de traitement 72 (équipée par exemple d'au moins un processeur, FPGA, ou DSP), pilotée ou pré-programmée par une application ou un programme d'ordinateur 73 mettant en œuvre au moins une partie du procédé de gestion d'au moins un réseau de communication selon un mode de réalisation de l'invention (mis en œuvre par une entité de gestion de la diffusion).

A l'initialisation, les instructions de code du programme d'ordinateur 73 sont par exemple chargées dans une mémoire RAM avant d'être exécutées par l'unité de traitement 72. L'unité de traitement 72 met en œuvre au moins une partie des étapes du procédé de gestion, selon les instructions du programme d'ordinateur 73.

Pour ce faire, selon un mode de réalisation, l'unité de traitement 72 de l'entité de gestion de la diffusion est configurée pour :
- recevoir un message d'annonce diffusé, sur une adresse multicast, par une entité de gestion de la mobilité, ledit message d'annonce portant un identifiant de ladite entité de gestion de la mobilité.

## Revendications

1. Procédé de gestion d'au moins un réseau de communication comprenant un premier réseau, ledit procédé étant mis en œuvre dans un système comprenant au moins une entité de gestion de la mobilité (331) du cœur de réseau dudit premier réseau ou d'au moins un deuxième réseau dudit au moins un réseau de communication, une entité de coordination de la diffusion (321, 322) associée à au moins une station de base du réseau d'accès radio dudit premier réseau ou d'au moins un deuxième réseau dudit au moins un réseau de communication, une entité de gestion de la diffusion (341) du cœur de réseau, ledit système mettant en œuvre :
- la diffusion (41), par l'entité de de gestion de la mobilité (331) du cœur de réseau, sur une adresse IP multicast, d'un message d'annonce portant un identifiant de ladite entité de gestion de la mobilité (331) ;
- la réception (421, 422), par l'entité de coordination de la diffusion (321, 322) et par l'entité de gestion de la diffusion (341) du cœur de réseau, dudit message d'annonce ;
- la configuration automatique de l'entité de gestion de la diffusion (341) avec les informations portées par ledit message d'annonce ;
- la transmission (431, 432), par l'entité de coordination de la diffusion (321, 322) à l'entité de gestion de la mobilité (331) d'au moins un message d'attachement, portant un identifiant de ladite entité de coordination de la diffusion ;
- la réception (44), par l'entité de gestion de la mobilité (331) du cœur de réseau, dudit au moins un message d'attachement portant un identifiant de l'entité de coordination de la diffusion (321, 322) émettrice dudit message d'attachement ;
- l'attachement, par l'entité de gestion de la mobilité, de l'entité de coordination de la diffusion ; où l'entité de coordination de la diffusion assure le contrôle de l'accès et l'allocation des ressources radio à la station de base à laquelle elle est associée et ;
où l'entité de gestion de la diffusion permet d'allouer des ressources radio et de générer des flux de données à diffuser en communiquant avec un serveur de contenu.

2. Procédé selon la revendication 1, **caractérisé en ce que** ladite entité de gestion de la mobilité (331) reçoit également :
- au moins une information représentative d'au moins une zone de diffusion associée à ladite ou auxdites entités de coordination de la diffusion (321, 322), et/ou
- au moins une liste d'au moins un support multicast activé dans au moins une zone de diffusion associée à ladite ou auxdites entités de coordination de la diffusion (321, 322).

3. Procédé selon la revendication 2, **caractérisé en ce que** ladite entité de gestion de la mobilité (331) met à jour ledit message d'annonce en y ajoutant ladite au moins une information et/ou ladite au moins une liste.

4. Procédé selon l'une quelconque des revendications 1 à 3, **caractérisé en ce que** ladite entité de gestion de la mobilité (331) met également en œuvre :
- la réception d'une demande d'activation d'au moins un support multicast dans au moins une zone de diffusion fédérée, en provenance d'une entité de gestion de la diffusion (341) du cœur de réseau du premier réseau,
- l'identification de la ou des entités de coordination de la diffusion (321, 322) associées à ladite zone de diffusion fédérée, appartenant audit premier réseau et/ou audit au moins un deuxième réseau,
- la transmission de ladite demande d'activation auxdites entités de coordination de la diffusion (321, 322) identifiées.

5. Procédé selon l'une quelconque des revendications 1 à 4, **caractérisé en ce que** ladite entité de gestion de la mobilité (331) transmet à ladite au moins une entité de coordination de la diffusion (321, 322) des paramètres de configuration du réseau auquel appartient ladite entité de gestion de la mobilité (331).

6. Procédé selon la revendication 1, **caractérisé en ce que** ladite entité de coordination de la diffusion (321, 322) transmet également à ladite entité de gestion de la mobilité (331) :
- au moins une information représentative d'au moins une zone de diffusion associée à ladite entité de coordination de la diffusion et/ou
- au moins une liste d'au moins un support multicast activé dans au moins une zone de diffusion associée à ladite entité de coordination de la diffusion (321, 322).

7. Procédé selon la revendication 6, **caractérisé en ce que** ladite entité de coordination de la diffusion (321, 322) met à jour ledit message d'attachement en y ajoutant ladite au moins une information et/ou ladite au moins une liste.

8. Procédé selon l'une quelconque des revendications 6 et 7, **caractérisé en ce que** ladite entité de coordination de la diffusion (321, 322) met également en œuvre :
- l'obtention de paramètres de configuration du réseau auquel appartient ladite entité de gestion de la mobilité (331),
- la vérification de sa compatibilité avec lesdits paramètres de configuration.

9. Procédé selon la revendication 8, **caractérisé en ce qu'**en cas de vérification positive, ladite entité de coordination de la diffusion (321, 322) est configurée à partir desdits paramètres de configuration, et **en ce qu'**en cas de vérification négative, ladite entité de coordination de la diffusion (321, 322) met en œuvre la transmission à ladite entité de gestion de la mobilité (331) d'une information selon laquelle ladite entité de coordination de la diffusion ne peut pas travailler en mode synchronisé.

10. Procédé selon la revendication 1, **caractérisé en ce que** ledit message d'annonce porte également :
- au moins une information représentative d'au moins une zone de diffusion associée à ladite entité de coordination de la diffusion (321, 322) associée à au moins une station de base du réseau d'accès radio attachée à ladite entité de gestion de la mobilité (331) ; et/ou
- au moins une liste d'au moins un support multicast activé dans au moins une zone de diffusion associée à ladite entité de coordination de la diffusion (321, 322) associée à au moins une station de base du réseau d'accès radio attachée à ladite entité de gestion de la mobilité (331).

11. Procédé selon la revendication 10, **caractérisé en ce que** ladite entité de gestion de la diffusion (341) met en œuvre :
- la réception d'une demande d'activation d'au moins un support multicast dans au moins une zone de diffusion fédérée, en provenance d'un serveur d'application (351),
- la vérification de la disponibilité des ressources radio dans ladite au moins une zone de diffusion fédérée, en tenant compte du ou des supports multicast activés dans ladite zone de diffusion fédérée, obtenus à partir de ladite liste,
- en cas de vérification positive, la transmission à ladite entité de gestion de la mobilité de ladite demande d'activation d'au moins un support multicast dans ladite au moins une zone de diffusion fédérée.

12. Système comprenant au moins une entité de gestion de la mobilité (331) du cœur de réseau d'un premier réseau ou d'au moins un deuxième réseau d'au moins un réseau de communication, une entité de coordination de la diffusion (321, 322) associée à au moins une station de base du réseau d'accès radio dudit premier réseau ou d'au moins un deuxième réseau dudit au moins un réseau de communication, une entité de gestion de la diffusion (341) du cœur de réseau, **caractérisé en ce que** :
ladite entité de gestion de la mobilité (331) du cœur de réseau d'un premier réseau d'au moins un réseau de communication, comprend :
- des moyens de diffusion, sur une adresse IP multicast, d'un message d'annonce portant un identifiant de ladite entité de gestion de la mobilité (331);
- des moyens de réception d'au moins un message d'attachement, en provenance de ladite entité de coordination de la diffusion (321, 322), portant un identifiant de l'entité de coordination de la diffusion émettrice dudit message d'attachement ;
ladite entité de coordination de la diffusion (321, 322) comprend :
- des moyens de réception d'un message d'annonce diffusé, sur une adresse IP multicast, par ladite entité de gestion de la mobilité (331), ledit message d'annonce portant un identifiant de ladite entité de gestion de la mobilité (331);
- des moyens de transmission à ladite entité de gestion de la mobilité (331) d'au moins un message d'attachement, portant un identifiant de ladite entité de coordination de la diffusion (321, 322) ;
ladite entité de gestion de la diffusion (341) comprend des moyens de réception d'un message d'annonce diffusé, sur une adresse IP multicast, par ladite entité de gestion de la mobilité (331), ledit message d'annonce portant un identifiant de ladite entité de gestion de la mobilité (331) et des moyens de configuration automatique avec les informations portées par ledit message d'annonce.

## Patentansprüche

1. Verfahren zum Verwalten mindestens eines Kommunikationsnetzes, das ein erstes Netz umfasst, wobei das Verfahren in einem System durchgeführt wird, das mindestens eine Mobilitätsmanagementeinheit (331) des Netzkerns des ersten Netzes oder mindestens eines zweiten Netzes des mindestens einen Kommunikationsnetzes, eine Sendekoordinationseinheit (321, 322), die mindestens einer Basisstation des Funkzugangsnetzes des ersten Netzes oder mindestens eines zweiten Netzes des mindestens einen Kommunikationsnetzes zugeordnet ist, und eine Sendeverwaltungseinheit (341) des Netzkerns umfasst, wobei das System Folgendes implementiert:
- die Übertragung (41) einer Ankündigungsnachricht, die eine Kennung der Mobilitätsmanagementeinheit (331) enthält, mittels der Mobilitätsmanagementeinheit (331) des Netzkerns über eine IP-Multicast-Adresse;
- den Empfang (421, 422) der Ankündigungsnachricht durch die Sendekoordinationseinheit (321, 322) und die Sendeverwaltungseinheit (341) des Netzkerns;
- die automatische Konfiguration der Sendeverwaltungseinheit (341) mit den in der Ankündigungsnachricht enthaltenen Informationen;
- die Übertragung (431, 432) mindestens einer Anbindungsnachricht, die eine Kennung der Sendekoordinationseinheit enthält, mittels der Sendekoordinationseinheit (321, 322) an die Mobilitätsmanagementeinheit (331);
- der Empfang (44) durch die Mobilitätsmanagementeinheit (331) des Netzkerns der mindestens einen Anbindungsnachricht, die eine Kennung der Sendekoordinationseinheit (321, 322) enthält, die Senderin der Anbindungsnachricht ist;
- die Anbindung der Sendekoordinationseinheit mittels der Mobilitätsmanagementeinheit, wobei die Sendekoordinationseinheit die Zugangskontrolle und die Zuweisung der Funkressourcen an die Basisstation, mit der sie verbunden ist, gewährleistet, und
wobei die Sendeverwaltungseinheit es durch Kommunikation mit einem Content-Server gestattet, Funkressourcen zuzuweisen und zu sendende Datenströme zu erzeugen.

2. Verfahren nach Anspruch 1, **dadurch gekennzeichnet, dass** die Mobilitätsmanagementeinheit (331) außerdem empfängt:
- mindestens eine Information, die für mindestens einen Sendebereich repräsentativ ist, welcher der oder den Sendekoordinationseinheiten (321, 322) zugeordnet ist, und/oder
- mindestens eine Liste von mindestens einem Multicast-Träger, der in mindestens einem mit der oder den Sendekoordinationseinheiten (321, 322) verbundenen Sendebereich aktiviert ist.

3. Verfahren nach Anspruch 2, **dadurch gekennzeichnet, dass** die Mobilitätsmanagementeinheit (331) die Ankündigungsnachricht aktualisiert, indem sie ihr die mindestens eine Information und/oder die mindestens eine Liste hinzufügt.

4. Verfahren nach einem der Ansprüche 1 bis 3, **dadurch gekennzeichnet, dass** die Mobilitätsmanagementeinheit (331) außerdem Folgendes implementiert:
- den Empfang einer Aktivierungsanforderung mindestens eines Multicast-Trägers in mindestens einem gemeinsamen Sendebereich, die von einer Sendeverwaltungseinheit (341) des Netzkerns des ersten Netzes stammt,
- die Identifizierung der dem gemeinsamen Sendebereich zugeordneten Sendekoordinationseinheit(en) (321, 322), die zu dem ersten Netz und/oder dem mindestens einen zweiten Netz gehören,
- die Übertragung der genannten Aktivierungsanforderung an die identifizierten Sendekoordinationseinheiten (321, 322).

5. Verfahren nach einem der Ansprüche 1 bis 4, **dadurch gekennzeichnet, dass** die Mobilitätsmanagementeinheit (331) an die mindestens eine Sendekoordinationseinheit (321, 322) Konfigurationsparameter des Netzes übermittelt, zu dem die Mobilitätsmanagementeinheit (331) gehört.

6. Verfahren nach Anspruch 1, **dadurch gekennzeichnet, dass** die Sendekoordinationseinheit (321, 322) ebenfalls an die Mobilitätsmanagementeinheit (331) überträgt:
- mindestens eine Information, die mindestens einen der Sendekoordinationseinheit zugeordneten Sendebereich repräsentiert, und/oder
- mindestens eine Liste von mindestens einem Multicast-Träger, der in mindestens einem der Sendekoordinationseinheit (321, 322) zugeordneten Sendebereich aktiviert ist.

7. Verfahren nach Anspruch 6, **dadurch gekennzeichnet, dass** die Sendekoordinationseinheit (321, 322) die Anbindungsnachricht aktualisiert, indem sie ihr die mindestens eine Information und/oder die mindestens eine Liste hinzufügt.

8. Verfahren nach einem der Ansprüche 6 und 7, **dadurch gekennzeichnet, dass** die Sendekoordinationseinheit (321, 322) außerdem Folgendes implementiert:
- die Erlangung von Konfigurationsparametern des Netzes, zu dem die Mobilitätsmanagementeinheit (331) gehört,
- die Überprüfung ihrer Kompatibilität mit den Konfigurationsparametern.

9. Verfahren nach Anspruch 8, **dadurch gekennzeichnet, dass** im Falle einer positiven Überprüfung die Sendekoordinationseinheit (321, 322) anhand der Konfigurationsparameter konfiguriert wird, und dass im Falle einer negativen Überprüfung die Sendekoordinationseinheit (321, 322) die Übertragung einer Information an die Mobilitätsmanagementeinheit (331) ausführt, wonach die Sendekoordinationseinheit nicht im synchronisierten Modus arbeiten kann.

10. Verfahren nach Anspruch 1, **dadurch gekennzeichnet, dass** die Ankündigungsnachricht außerdem Folgendes enthält:
- mindestens eine Information, die mindestens einen Sendebereich repräsentiert, welcher mit der Sendekoordinationseinheit (321, 322) verbunden ist, die mit mindestens einer Basisstation des Funkzugangsnetzes verbunden ist, das der Mobilitätsmanagementeinheit (331) zugeordnet ist; und/oder
- mindestens eine Liste von mindestens einem Multicast-Träger, der in mindestens einem Sendebereich aktiviert ist, welcher mit der Sendekoordinationseinheit (321, 322) verbunden ist, die mit mindestens einer Basisstation des Funkzugangsnetzes verbunden ist, die der Mobilitätsmanagementeinheit (331) zugeordnet ist.

11. Verfahren nach Anspruch 10, **dadurch gekennzeichnet, dass** die Sendeverwaltungseinheit (341) Folgendes ausführt:
- den Empfang einer Aktivierungsanforderung von mindestens einem Multicast-Träger in mindestens einem gemeinsamen Sendebereich ausgehend von einem Anwendungsserver (351),
- die Überprüfung der Verfügbarkeit von Funkressourcen in dem mindestens einen gemeinsamen Sendebereich unter Berücksichtigung des oder der in dem gemeinsamen Sendebereich aktivierten Multicast-Träger, die anhand der Liste erhalten wurden,
- im Falle einer positiven Überprüfung die Übertragung der Aktivierungsanforderung von mindestens einem Multicast-Träger in dem mindestens einen gemeinsamen Sendebereich an die Mobilitätsmanagementeinheit.

12. System umfassend mindestens eine Mobilitätsmanagementeinheit (331) des Netzkerns eines ersten Netzes oder mindestens eines zweiten Netzes von mindestens einem Kommunikationsnetz, eine Sendekoordinationseinheit (321, 322), die mit mindestens einer Basisstation des Funkzugangsnetzes des ersten Netzes oder mindestens eines zweiten Netzes des mindestens einen Kommunikationsnetzes verbunden ist, eine Sendeverwaltungseinheit (341) des Netzkerns, **dadurch gekennzeichnet, dass**:
die Mobilitätsmanagementeinheit (331) des Netzkerns eines ersten Netzes von mindestens einem Kommunikationsnetz umfasst:
- Mittel zur Übertragung über eine IP-Multicast-Adresse einer Ankündigungsnachricht, die eine Kennung der Mobilitätsmanagementeinheit (331) enthält;
- Mittel zum Empfang mindestens einer von der Sendekoordinationseinheit (321, 322) stammenden Anbindungsnachricht, die eine Kennung der Sendekoordinationseinheit enthält, die Senderin der Anbindungsnachricht ist;
die Sendekoordinationseinheit (321, 322) umfasst:
- Mittel zum Empfang einer von der Mobilitätsmanagementeinheit (331) über eine Multicast-IP-Adresse gesendeten Ankündigungsnachricht, wobei die Ankündigungsnachricht eine Kennung der Mobilitätsmanagementeinheit (331) enthält;
- Mittel zum Senden mindestens einer Anbindungsnachricht, die eine Kennung der Sendekoordinationseinheit (321, 322) enthält, an die Mobilitätsmanagementeinheit (331);
wobei die Sendeverwaltungseinheit (341) Mittel zum Empfang einer von der Mobilitätsmanagementeinheit (331) über eine Multicast-IP-Adresse gesendeten Ankündigungsnachricht umfasst, wobei die Ankündigungsnachricht eine Kennung der genannten Mobilitätsmanagementeinheit (331) und Mittel zur automatischen Konfiguration mit den in der Ankündigungsnachricht enthaltenen Informationen enthält.

## Claims

1. A method for managing at least one communication network comprising a first network, the method being implemented by a system comprising at least one mobility management entity (331) of a network core of said first network or of at least one second network of said at least one communication network, a broadcast coordination entity (321, 322) associated with at least one base station of the radio access network of said first network or of at least one second network, and a broadcast management entity (341) of the network core, the method comprising:
- the broadcasting, by the mobility management entity (331), on a multicast IP address, of an announcement message carrying an identifier of said mobility management entity (331);
- the receiving, by the broadcast coordination entity (321, 322) and by the broadcast management entity (341), of said announcement message;
- the automatic configuration of the broadcast management entity (341) with the information carried by said announcement message;
- the transmitting, by the broadcast coordination entity (321, 322) to the mobility management entity (331), of at least one attachment message carrying an identifier of said broadcast coordination entity;
- the receiving, by the mobility management entity (331), of said at least one attachment message carrying an identifier of the broadcast coordination entity (321, 322) emitting said attachment message;
- the attaching, by the mobility management entity, of the broadcast coordination entity; wherein the broadcast coordination entity ensures access control and allocation of radio resources to the base station with which it is associated; and wherein the broadcast management entity allocates radio resources and generates data streams to be broadcast by communicating with a content server.

2. The method according to claim 1, further comprising the receiving, by said mobility management entity (331), of:
- at least one piece of information representative of at least one broadcast area associated with said broadcast coordination entity or entities (321, 322), and/or
- at least one list of at least one multicast bearer activated in at least one broadcast area associated with said broadcast coordination entity or entities (321, 322).

3. The method according to claim 2, further comprising the updating, by said mobility management entity (331), of said announcement message by adding said at least one piece of information and/or said at least one list.

4. The method according to any one of claims 1 to 3, further comprising:
- the receiving, by said mobility management entity (331), of an activation request for activating at least one multicast bearer in at least one federated broadcast area, from a broadcast management entity (341) of the network core of the first network;
- the identifying, by said mobility management entity (331), of the broadcast coordination entity or entities (321, 322) associated with said federated broadcast area, belonging to said first network and/or to said at least one second network;
- the transmitting, by said mobility management entity (331), of said activation request to said identified broadcast coordination entities (321, 322).

5. The method according to any one of claims 1 to 4, further comprising the transmitting, by said mobility management entity (331), to said at least one broadcast coordination entity (321, 322), of configuration parameters of the network to which said mobility management entity (331) belongs.

6. The method according to claim 1, further comprising the transmitting, by said broadcast coordination entity (321, 322), to said mobility management entity (331), of:
- at least one piece of information representative of at least one broadcast area associated with said broadcast coordination entity, and/or
- at least one list of at least one multicast bearer activated in at least one broadcast area associated with said broadcast coordination entity (321, 322).

7. The method according to claim 6, further comprising the updating, by said broadcast coordination entity (321, 322), of said attachment message by adding said at least one piece of information and/or said at least one list.

8. The method according to any one of claims 6 or 7, further comprising:
- the obtaining, by said broadcast coordination entity (321, 322), of configuration parameters of the network to which said mobility management entity (331) belongs;
- the verifying, by said broadcast coordination entity (321, 322), of its compatibility with said configuration parameters.

9. The method according to claim 8, wherein, upon positive verification, said method further comprises the configuration of said broadcast coordination entity (321, 322) from said configuration parameters, and wherein, upon negative verification, said method further comprises the transmitting, by said broadcast coordination entity (321, 322), to said mobility management entity (331), of a piece of information indicating that said broadcast coordination entity cannot operate in synchronized mode.

10. The method according to claim 1, wherein said announcement message also carries:
- at least one piece of information representative of at least one broadcast area associated with said broadcast coordination entity (321, 322) associated with at least one base station of the radio access network attached to said mobility management entity (331); and/or
- at least one list of at least one multicast bearer activated in at least one broadcast area associated with said broadcast coordination entity (321, 322) associated with at least one base station of the radio access network attached to said mobility management entity (331).

11. The method according to claim 10, further comprising:
- the receiving, by said broadcast management entity (341), of an activation request for activating at least one multicast bearer in at least one federated broadcast area, from an application server (351);
- the checking, by said broadcast management entity (341), of availability of radio resources in said at least one federated broadcast area, taking into account the multicast bearer or bearers activated in said federated broadcast area, obtained from said list;
- upon positive verification, the transmitting, by said broadcast management entity (341), to said mobility management entity, of said request for activation of at least one multicast bearer in said at least one federated broadcast area.

12. A system comprising:
- at least one mobility management entity (331) of a network core of a first network or of at least one second network of at least one communication network;
- a broadcast coordination entity (321, 322) associated with at least one base station of the radio access network of said first network or of at least one second network; and
- a broadcast management entity (341) of the network core; wherein: the mobility management entity (331) comprises means for:
- the broadcasting, on a multicast IP address, of an announcement message carrying an identifier of said mobility management entity (331); and
- the receiving of at least one attachment message from said broadcast coordination entity (321, 322), carrying an identifier of the broadcast coordination entity emitting said attachment message; the broadcast coordination entity (321, 322) comprises means for:
- the receiving of an announcement message broadcast, on a multicast IP address, by said mobility management entity (331), said announcement message carrying an identifier of said mobility management entity (331); and
- the transmitting to said mobility management entity (331) of at least one attachment message carrying an identifier of said broadcast coordination entity (321, 322); the broadcast management entity (341) comprises means for:
- the receiving of an announcement message broadcast, on a multicast IP address, by said mobility management entity (331), said announcement message carrying an identifier of said mobility management entity (331); and
- the automatic configuration of the broadcast management entity (341) with the information carried by said announcement message.
